# FASCICULE DE BREVET EUROPEEN

(11) **EP 0 516 493 B1**
(45) Date de publication et mention de la délivrance du brevet: **03.07.1996**
(21) Numéro de dépôt: 92401091.1
(22) Date de dépôt: 17.04.1992
(51) Int. Cl.: F02B 77/08, G01D 5/14

(54) **Détecteur de premier cylindre d'un moteur à combustion interne à injection**
Nachweisgerät für die Bestimmung des ersten Zylinders einer Brennkraftmaschine mit Einspritzung
Sensor for the detection of the first cylinder of an internal combustion, engine with fuel injection

(30) Priorité: 30.04.1991 FR 9105310
(43) Date de publication de la demande: 02.12.1992
(73) Titulaire: SAGEM ALLUMAGE, F-75783 Paris Cédex 16 (FR)
(72) Inventeur: Brosse, Gérard, F-94000 Créteil (FR)
(74) Mandataire: Bloch, Gérard

(56) Documents cités:
- FR-A- 1 537 362
- FR-A- 2 331 774
- FR-A- 2 368 039
- FR-A- 2 388 248
- FR-A- 2 566 839
- US-A- 4 293 837

## Description

La présente invention concerne un détecteur de premier cylindre d'un moteur à combustion interne et à essence, et plus particulièrement un détecteur selon le préambule de la revendication 1, du type décrit dans le document FR-A-2 388 248.

Un tel détecteur a pour but de séquencer convenablement l'injection d'essence dans les cylindres du moteur en initialisant l'injection dans un cylindre déterminé, dit premier cylindre.

Un détecteur de premier cylindre est indispensable aussi bien dans les moteurs à allumage dynamique par calculateur que dans les moteurs à allumage statique, donc aussi par calculateur, c'est-à-dire dans tous les moteurs à allumage par calculateur qui, dans sa fonction d'injection, doit être initialisé.

La présente invention concerne plus particulièrement un détecteur de premier cylindre comprenant un capteur à effet Hall unipolaire associé à un aimant permanent et agencé pour détecter le passage d'une cible en matériau magnétique doux, dépourvu de zone à aimantation permanente, qui, lors de son passage devant le capteur et l'aimant, boucle les lignes de champ de l'aimant sur le capteur.

Comme cible, on utilise généralement un bossage ménagé sur une poulie solidaire de l'arbre à cames du moteur et correspondant au point mort haut (PMH) du premier cylindre.

Lors du passage de la cible devant le détecteur, la zone sensible du capteur à effet Hall est soumise ainsi à une variation de flux magnétique qui doit être détectée.

En fait, cette variation peut ne pas être détectée si elle est insuffisante par rapport à un flux de fuite permanent entre le capteur et l'aimant permanent.

En d'autres termes, et sauf à vouloir déporter exagérément l'aimant par rapport au capteur, l'induction magnétique, en l'absence de cible, peut être trop importante pour qu'un changement d'état du circuit Hall au passage de la cible puisse être détecté.

En d'autres termes encore, un tel détecteur de premier cylindre n'est fiable que pour des entrefers capteur-cible très faibles, inférieurs à 0,2 mm environ.

On a déjà proposé, pour augmenter cette dimension d'entrefer, de doubler le capteur et donc d'en associer deux à un aimant permanent. Le signal de sortie du capteur le plus proche de la trajectoire de la cible est modulé, le signal de sortie de l'autre ne l'est pas et, par sommation des signaux de sortie, on parvient à détecter un passage de cible avec un entrefer pouvant atteindre environ 1 mm. Mais c'est une solution onéreuse, car elle implique deux capteurs de même sensibilité, ce qui est particulièrement difficile à réaliser.

La présente invention vise à proposer une solution à ce problème.

A cet effet, la présente invention concerne un détecteur selon la revendication 1.

Grâce à l'invention, quelle que soit la dimension de l'entrefer capteur-cible, puisqu'en l'absence de cible l'induction de repos à laquelle est soumis le capteur est quasiment nulle, le capteur peut détecter la variation de flux, aussi faible soit-elle, provoquée par le passage de la cible.

Comme il est facile de réaliser deux aimants quasiment identiques, contrairement à deux capteurs identiques, les champs, de même valeur, des deux aimants du détecteur de l'invention s'opposent pour annuler l'induction dans la zone sensible du capteur.

L'invention sera mieux comprise à l'aide de la descripticn suivante de la forme de réalisation préferée du détecteur de l'invention, en référence au dessin annexé, sur lequel
- la figure 1 est une vue schématique du détecteur de l'invention;

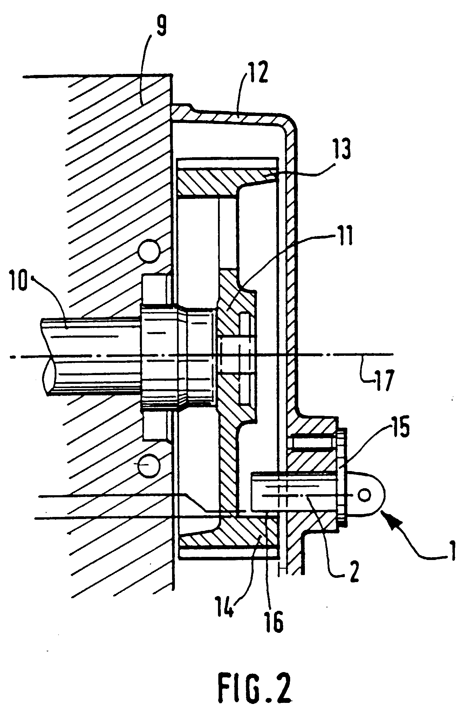

- la figure 2 est une vue partiellement en coupe longitudinale d'une partie du moteur dans lequel est implanté le détecteur et
- la figure 3 est une vue en bout de la partie de moteur de la figure 2.

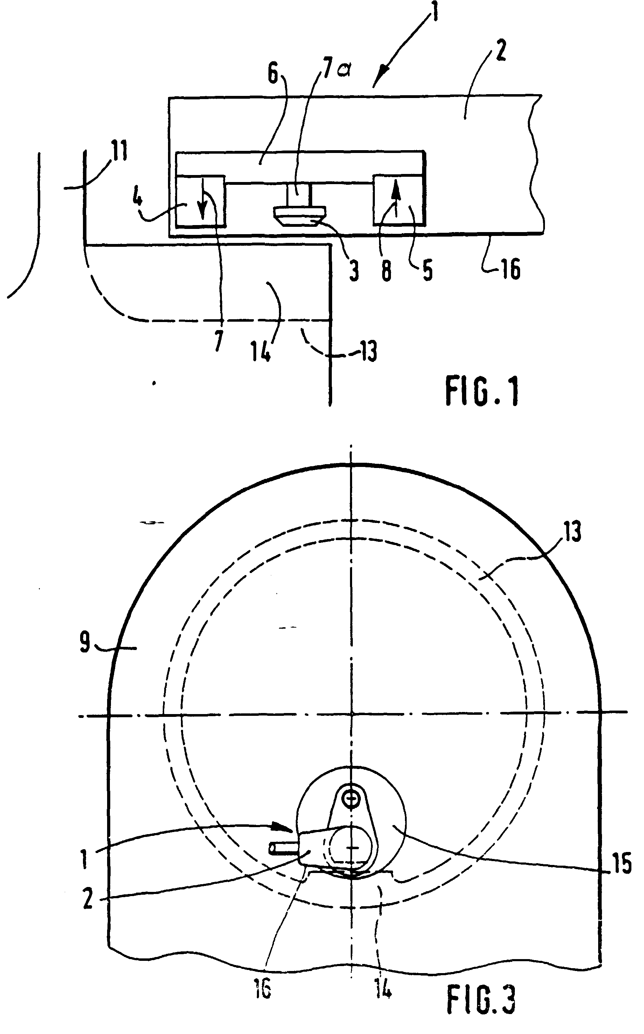

Le détecteur de premier cylindre 1 est implanté sur une plaquette de circuit imprimé 2, sur une face de laquelle, non visible sur la figure 1, sont montés, de façon classique, des composants de traitement du signal de détection et dont l'autre face porte un capteur à effet Hall unipolaire 3 et deux aimants permanents 4, 5 fixés, tous les trois à une armature 6, le capteur 3, à un prolongement transversal 7a de l'armature. Le capteur 3 et les aimants 4, 5 sont ici fixés par collage, tout comme l'armature 6 à la plaquette 2. Les deux aimants 4, 5 sont disposés symétriquement par rapport à la zone sensible du capteur 3, près d'un bord actif 16 de la plaquette et l'aimant 4 sensiblement en bout de la plaquette, et ils produisent deux champs magnétiques de même amplitude mais de lignes de force dirigées respectivement dans deux directions opposées 7, 8 sensiblement parallèles à la plaquette 2 et perpendiculaires au plan général de l'armature 6 et au bord actif 16 de la plaquette.

Le détecteur 1 est implanté pour séquencer l'injection d'essence dans les cylindres d'un moteur 9 à combustion interne comprenant, notamment, un arbre à cames 10. En bout d'arbre 10 est clavetée une poulie 11, en matériau magnétique doux, protégée par un couvercle 12. La poulie 11 comporte une jante externe 13, tournée vers l'extérieur du moteur, dont une portion angulaire 14, désignée ci-dessus sous le nom de cible, a une épaisseur radiale notablement plus grande que le reste de la jante d'épaisseur plus mince. La poulie 11 tourne donc avec l'arbre à cames 10 et est mobile en rotation et en phase avec le piston du premier cylindre du moteur 9.

La plaquette 2 du détecteur 1 est montée sur une bride 15 fixée par l'extérieur au couvercle 12 et elle s'étend à travers le couvercle 12 en saillie à l'intérieur sur une distance dite de recouvrement sensiblement égale à l'écartement des bords opposés du capteur 3 et de l'aimant 4 fixé en bout de plaquette. Le bord actif 16 de la plaquette 2 est à une distance de l'axe 17 de l'arbre 10 seulement très légèrement inférieure au rayon interne de la portion épaissie 14 de la jante 13 de la poulie 11, pour ménager ici un faible entrefer lors du passage de cette portion 14 devant le détecteur 1.

Lorsque la portion épaissie, ou cible, 14 de la jante 13 de la poulie 11 se trouve en regard du détecteur 1, le piston du premier cylindre du moteur 9 se trouve au point mort haut.

Le détecteur 1 est implanté pour détecter le passage de la cible 14.

Lorsque la portion mince de la jante 13 de la poulie 11 est en regard du détecteur 1, qualifiée précédemment de repos et illustrée en tirets sur la figure 1, les champs magnétiques des deux aimants 4, 5, dans la zone sensible du capteur 3, s'annulent et cette zone sensible est soumise à une induction résultante nulle ou quasi-nulle. Lorsque la cible 14 passe devant l'aimant 4 et le capteur 3, elle boucle sur le capteur 3 plus de lignes de champ de l'aimant 4 que de l'aimant 5, le premier devenant prépondérant. Il en résulte une variation de flux détectée par le capteur 3 et saisie par les composants de la plaquette 2 qui génère ainsi un signal de sortie carré.

## Revendications

1. Détecteur de premier cylindre pour moteur (9) à combustion interne et à essence, comprenant un capteur à effet Hall unipolaire (3) agencé pour détecter le passage d'une cible (14) en matériau magnétique doux mobile en déplacement avec le piston dudit premier cylindre et destinée à boucler des lignes de champ d'un aimant permanent (4) sur la zone sensible du capteur (3), détecteur caractérisé par le fait qu'il est prévu deux aimants permanents (4, 5) produisant des champs de même amplitude et de polarités inverses et disposés symétriquement par rapport à la zone sensible du capteur (3), le capteur (3) et les deux aimants (4, 5) étant disposés pour que ne soient soumis à l'action de la cible (14) que le capteur (3) et l'un (4) des deux aimants lors du passage de la cible (14) devant le détecteur.

2. Détecteur selon la revendication 1, implanté pour coopérer avec une cible (14) constituée par une portion épaissie de la jante (13) d'une poulie (11) solidaire de l'arbre à cames (10) du moteur (9).

## Patentansprüche

1. Detektor für den ersten Zylinder eines Verbrennungs-Benzinmotors (9), enthaltend einen einpoligen Halleffekt-Sensor (3), der dazu dient, die Passage einer aus weichmagnetischem Material bestehenden Zuführungsplatte (14) zu erfassen, die in Abhängigkeit von der Lageveränderung dieses ersten Zylinders beweglich ist und dazu dient, die Feldlinien eines Permanentmagneten (4) der sensiblen Zone des Sensors (3) zuzuführen, dadurch gekennzeichnet, daß zwei Permanentmagnete (4, 5) vorgesehen sind, welche Felder gleiche Amplitude und inverser Polaritäten erzeugen und relativ zur sensiblen Zone des Sensors (3) symmetrisch zueinander angeordnet sind, und daß der Sensor (3) und die beiden Magnete (4, 5) so angeordnet sind, daß während der Passage der Zuführungsplatte (14) vor dem Detektor nur der Sensor (4) und der eine (4) der beiden Magnete dem Einfluß der Zuführungsplatte ausgesetzt sind.

2. Detektor nach Anspruch 1, welcher angeordnet ist, um mit einer Zuführungsplatte (14) zusammenzuwirken, die durch einen verdickten Abschnitt der Felge (13) eines Radkörpers (11) gebildet ist, der mit der Nockenwelle (10) des Motors (9) verbunden ist.

## Claims

1. First cylinder detector for an internal combustion and petrol engine (9), comprising a monopolar Hall effect sensor (3) arranged to detect the passage of a target (14) of soft magnetic material moving with the piston of the said first cylinder and intended to loop the field lines of a permanent magnet (4) onto the sensitive region of the sensor (3), the detector being characterised in that it is provided with two permanent magnets (4, 5) producing fields of the same amplitude and of reverse polarities and disposed symmetrically with respect to the sensitive region of the sensor (3), the sensor (3) and the two magnets (4, 5) being disposed so that only the sensor (3) and one (4) of the two magnets are subjected to the action of the target (14) when the target (14) passes in front of the detector.

2. Detector according to claim 1, positioned to cooperate with a target (14) comprised of a thick portion of the wheel (13) of a pulley (11) firmly fixed to the cam shaft (10) of the engine (9).
